# EUROPEAN PATENT SPECIFICATION

(11) **EP 0 785 722 B1**
(45) Date of publication and mention of the grant of the patent: **26.09.2001**
(21) Application number: 96914353.6
(22) Date of filing: 31.05.1996
(51) Int. Cl.: A23B 7/148

(54) **A BIOLOGICAL-TECHNOLOGICAL METHOD FOR PREVENTING THE APPEARANCE OF A VIOLET COLOURATION ON THE SHOOTS OF THE WHITE ASPARAGUS AFTER HARVESTING**
EIN BIOLOGISCH-TECHNISCHES VERFAHREN ZUR VERHINDERUNG DER VIOLETTFÄRBUNG DER KÖPFE VON WEISSEM SPARGEL NACH DER ERNTE
PROCEDE BIOLOGIQUE-TECHNOLOGIQUE POUR EMPECHER LA COLORATION VIOLETTE DES POUSSES D'ASPERGE BLANCHE APRES LA RECOLTE

(30) Priority: 31.05.1995 GR 95100213
(43) Date of publication of application: 30.07.1997
(73) Proprietor: Aristotle University of Thessaloniki, 540 06 Thessaloniki (GR)
(72) Inventor: DOGRAS, Konstantinos, 546 36 Thessaloniki (GR); SFAKIOTAKIS, Evangelos, 552 35 Thessaloniki (GR); SIOMOS, Anastasios, 566 25 Thessaloniki (GR)
(74) Representative: Panagiotidou, Effimia
(86) International application number: GR9600014
(87) International publication number: WO9638046

(56) References cited:
- EP-A- 0 136 042
- EP-A- 0 280 961
- EP-A- 0 356 161
- WO-A-89/01297
- WO-A-92/15499
- WO-A-95/07949
- GB-A- 1 134 667
- US-A- 3 630 759
- US-A- 4 104 410
- US-A- 4 337 276
- US-A- 4 685 305
- US-A- 5 045 331
- DATABASE WPI Week 9302 Derwent Publications Ltd., London, GB; AN 93-013370 XP002011459 & JP,A,04 341 139 (DAINIPPON PRINTING CO.) , 27 November 1992

## Description

The invention pertains to a biological-technological method which prevents the appearance of a violet colouration on white asparagus shoots after harvesting, through their exposure to carbon dioxide in gas form inside a refrigerated airtight chamber or inside a refrigerated chamber in which a selective permeability to respiratory gases is ensured, where the white asparagus shoots are placed.

As known, Greece exports 95% of its annual white asparagus harvest, that is, about 27,000 tons of white asparagus per year, thus covering 35% of the white asparagus imports of the Federal Republic of Germany, plus certain percentages in the imports of other countries such as France, The Netherlands, etc. One of the most serious problems the producers, transporters, retailers and consumers face with regard to the quality of the white asparagus shoots is the appearence of a violet colouration, a few hours after they are harvested. This colouration, due to the formation of anthocyanin, results in the deterioration of the quality and, by extention, in a fall in the price, which may be as much as 50% below the price of what is today considered to be 'white' asparagus according to the quality tolerance allowed by the quality specifications, with serious economic losses not only for the producer but for the local and national economy as well. In addition, the fact that large quantities are canned and distributed internationally with the violet colouration flaw, lowers the quality of the product, leading to a restriction of its marketability, which is internationally high.

With the purpose of solving the particular problem of the violet coloration of white asparagus shoots, one method has been previously proposed in EP-A-0280961.

For the enhancing of the freshness of asparagus, another method has been proposed in EP-A-0136042.

Scientific research and its applications have not been able to solve this problem to this day. Until now, carbon dioxide in gas form has been used in high concentration (20% - 100%) to solve various other problems regarding fruit and vegetables such as the breaking down of chlorophyl and the loss of the green colour, browning, softening, bacterial rot, insect control, etc.

However, neither in the applications of these researches nor in the international bibliography has there appeared any ascertainment or a simple mention or even any speculation as to the effect of carbon dioxide on the prevention of the appearance of a violet colouration created on white asparagus shoots after harvesting. Moreover, the particular problem of the appearance of a violet colouration on white asparagus shoots has, to this day, never been dealt with by any other method or product. This is precisely the problem the present invention solves.

The advantanges of this invention lie on the fact that this method prevents the appearance of a violet colouration, thus removing this particular flaw from the asparagus as well as all the above-mentioned unfavourable consequences on the marketability of the product and the economy.

The biological-technological method for preventing the appearance of a violet colouration on white asparagus shoots after harvesting, according to the present invention, is characterized by the fact that immediately after the asparagus shoots have been harvested and within 10 hours after that, the shoots are exposed to carbon dioxide in gas form, inside a refrigerated airtight chamber or a chamber in which a selective permeability to respiratory gases is ensured, equipped with a carbon dioxide supply conductor and a system controlling its flow, a gas sampling conductor, a carbon dioxide analyser, an oxygen analyser, and in which chamber there is a temperature of 0-20 degrees Celsius, for a period of 10-24 hours, effecting the prevention of the appearance of a violet colouration on the white asparagus shoots.
The chamber can be manufactured from metal, glass or plastic, provided the airtightness or the selective respiratory gas permeability of the chamber is ensured.
The carbon dioxide in gas form channelled to the asparagus shoots can be stored either inside or outside the refrigerated airtight chamber and be channelled into it through any kind of conductor (e.g., pipe, hole, etc.) made of any kind of material (plastic, metal, etc.).
The exposure of the asparagus shoots to carbon dioxide in gas form can be ensured either through the accumulation of the carbon dioxide produced by the respiration of the shoots or through the supply of carbon dioxide in gas form channelled from an artificial source inside or outside the chamber.

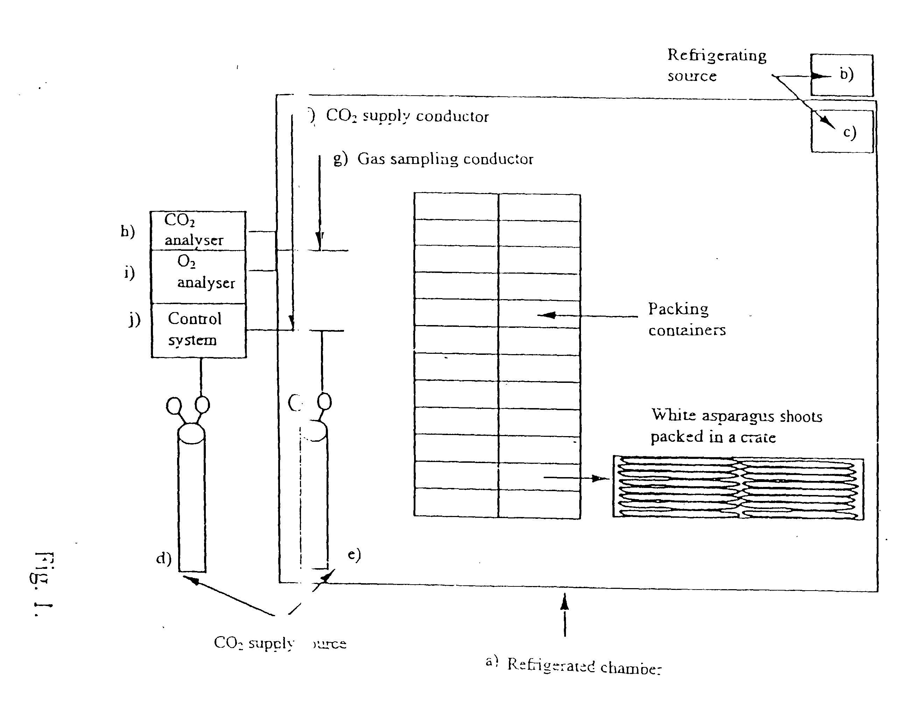

Figure 1 depicts an application of the biological-technological method for preventing the appearance of a violet colouration on white asparagus shoots after harvesting. The white asparagus shoots, packed in crates, are placed in a chamber (figure 1, a), cooled by a refrigerated source located, alternatively, inside or outside it (figure 1, b, c) and equipped with a CO₂ analyser (figure 1, h) and an O₂ analyser (figure 1, i) towards which O₂ and CO₂ accumulated inside the chamber (figure 1, a) are channelled through a conductor (figure 1, g) for measurement. From a supply source of CO₂ located alternatively inside or outside the refrigerated chamber (figure 1, d, e), CO₂ is channelled through a conductor (figure 1, f) into the chamber, controlled during its flow by the CO₂ flow control system (figure 1, j).

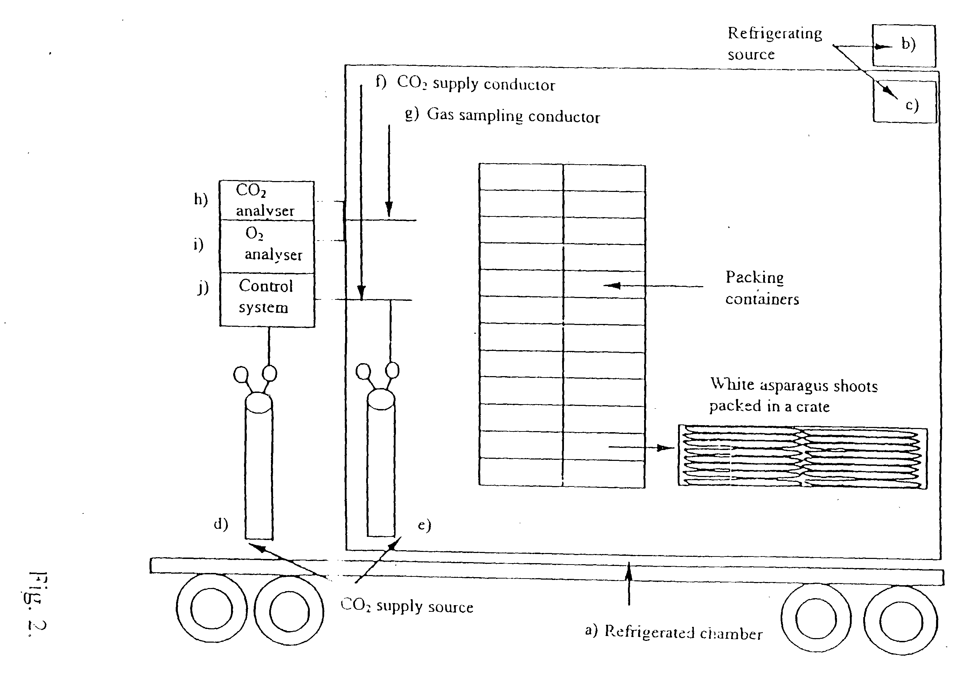

Figure 2 depicts an application of the biological-technological method for preventing the appearance of a violet colouration on white asparagus shoots after harvesting, in the form of an autonomous, portable, wheel- or vehicle-transportable system. The white asparagus shoots, packed in crates, are placed inside a chamber (figure 2, a), cooled by a refrigerated source located alternatively inside or outside it (figure 2, b, c) and equipped with a CO₂ analyser (figure 2, h) and an O₂ analyser (figure 2, i), towards which are channelled for measurement through a conductor (figure 2, g) the O₂ and the CO₂ accumulated inside the chamber (figure 2, a). From a CO₂ supply source located alternatively inside or outside the refrigerated chamber (figure 2, d, e), CO₂ is channelled through a conductor (figure 2, f) into the chamber, controlled during its flow by the CO₂ flow control system (figure 2, j).

One way of how the invention works is described with reference to the figures.

The biological-technological method for preventing the appearance of a violet colouration on white asparagus shoots after harvesting, consists of the exposure for 10-24 hours of the asparagus shoots to carbon dioxide in gas form inside a refrigerated airtight chamber or inside a chamber (figure 1, a) in which a selective respiratory gas permeability is ensured, and in which chamber there is a temperature of 0-20 degrees Celsius and inside which have been placed the white asparagus shoots within 10 hours of their harvest, thus preventing the appearance of a violet colouration on them. The chamber is equipped with a carbon dioxide supply conductor (figure 1, f) and a flow control system (figure 1, j) with a carbon dioxide analyser (figure 1, h) and an oxygen analyser (figure 1, i), a gas sampling conductor through which the gases of the refrigerated chamber are channelled towards the oxygen and carbon dioxide analysers (figure 1, g.) The carbon dioxide in gas form can be accumulated either through the respiration of the shoots or be stored within or without the refrigerated airtight chamber or the chamber in which a selective respiratory gas permeability is ensured (figure 1, d, e) and be channelled into it through any kind of conductor (e.g., pipe, hole) (figure 1, f) made of any kind of material (plastic, metal, etc.), effecting the same desired results. The chamber walls can be manufactured from any kind of material (e.g., metal, plastic, glass, etc.), provided the airtightness or the selective respiratory gas permeability of the chamber is ensured. The refrigerated source can be either inside or outside the chamber (figure 1, b, c.)

Therefore, the present invention has the distinct advantage of being able to be applied either in packing-sorting places or in research-experimental laboratories or in specially designed containers transporting the white asparagus shoots from the place of harvest to the canning factories and if applied in the form of an autonomous, portable, wheel- or vehicle-transportable (figure 2) system, to the packing, sorting or distribution places.

According to the invention, the exposure of the asparagus shoots to carbon dioxide in gas form can be achieved either through carbon dioxide accumulation produced by the respiration of the shoots or through the supply of carbon dioxide in gas form channelled from an artificial source which can be located inside or outside the airtight chamber (figure 1, d, e).

## Claims

1. A biological-technological method for preventing the appearance of a violet colouration on white asparagus shoots after harvesting, through their exposure to carbon dioxide in gas form, coming from an artificial source (d, e) or from the respiration of the shoots, inside a refrigerated chamber (a), which is **characterized by** the fact that the shoots are exposed to carbon dioxide in gas form for 10-24 hours, within 10 hours after they have been harvested, inside a refrigerated airtight chamber, or a chamber in which a selective respiratory gas permeability is ensured (a) and which has a temperature of 0-20 degrees Celsius.

2. A biological-technological method for preventing the appearance of a violet colouration on white asparagus shoots after harvesting according to claim 1, which is **characterized by** the fact that the chamber (a) can be made from metal, glass, or plastic, provided the airtightness of the chamber or the selective respiratory gas permeability is ensured.

3. A biological-technological method for preventing the appearance of a violet colouration on white asparagus shoots after harvesting according to claims 1 and 2, which is **characterized by** the fact that the carbon dioxide in gas form can be accumulated through the respiration of the shoots, or is stored outside or inside the chamber (d, e) and be channelled into it through a conductor (f).

## Patentansprüche

1. Eine biologisch-technische Methode zur Verhinderung des Auftretens einer Violettfärbung der weißen Spargelschösslinge nach der Ernte, indem diese gasförmigem Kohlendioxid ausgesetzt werden, das entweder aus einer künstlichen Quelle stammt (d, e), oder aus der Atmung der Schösslinge in einer Kühlkammer (a), die **dadurch gekennzeichnet** ist, dass die Schösslinge innerhalb von 10 Stunden nach ihrer Ernte 10-24 Stunden lang gasförmigem Kohlendioxid ausgesetzt werden, und zwar in einer luftdichten Kühlkammer oder in einer Kammer mit einer selektiven Durchlässigkeit von Atmungsgas (a) und einer Temperatur von 0-20 Grad Celsius.

2. Eine biologisch-technische Methode zur Verhinderung des Auftretens einer Violettfärbung der weißen Spargelschösslinge gemäß Forderung 1, die **dadurch gekennzeichnet** ist, dass die Kammer (a) aus Metall, Glas oder Kunststoff gefertigt sein kann, vorausgesetzt, die Luftundurchlässigkeit der Kammer oder die selektive Durchlässigkeit von Atmungsgas ist gewährleistet.

3. Eine biologisch-technische Methode zur Verhinderung des Auftretens einer Violettfärbung der weißen Spargelschösslinge gemäß Forderung 1 und 2, die **dadurch gekennzeichnet** ist, dass das gasförmige Kohlendioxid durch die Atmung der Schösslinge angesammelt wird oder außerhalb oder innerhalb der Kammer (d, e) gelagert ist und über eine Leitung (f) in die Kammer geleitet werden kann.

## Revendications

1. Méthode biologico-technologique pour empêcher l'apparition d'une coloration violette sur les tiges d'asperge blanche après récolte, par une exposition au dioxyde de carbone sous forme gazeuse, provenant d'une source artificielle (d, e) ou de la respiration des tiges, dans une chambre réfrigérée (a). La caractéristique de cette méthode est que les tiges sont exposées au dioxyde de carbone sous forme gazeuse pendant 10-24 heures, dans les 10 heures suivant la récolte, dans une chambre réfrigérée étanche, ou une chambre dans laquelle une perméabilité sélective au gaz respiratoire est assurée (a) et où la température est de 0-20 degrés Celsius.

2. Méthode biologico-technologique pour empêcher l'apparition d'une coloration violette sur les tiges d'asperge blanche après récolte suivant l'objectif 1, la caractéristique de cette méthode étant que la chambre peut-être en métal, verre ou plastique, à condition que la perméabilité sélective au gaz respiratoire soit assurée.

3. Méthode biologico-technologique pour empêcher l'apparition d'une coloration violette sur les tiges d'asperge blanche après récolte suivant les objectifs 1 et 2, la caractéristique de cette méthode étant que le dioxyde de carbone sous forme gazeuse peut s'accumuler à la suite de la respiration des tiges, ou être stocké à l'intérieur ou à l'extérieur de la chambre (d,e) et y être introduit par un conduit (f).
